# EUROPEAN PATENT APPLICATION

(11) **EP 4 748 794 A1**
(43) Date of publication of application: **27.05.2026**
(21) Application number: 25211772.6
(22) Date of filing: 28.10.2025
(51) Int. Cl.: C01G 53/05, C01G 53/42, H01M 4/525

(54) **POSITIVE ELECTRODE ACTIVE MATERIAL FOR SECONDARY BATTERY**

(30) Priority: 30.10.2024 KR 20240151214
(71) Applicant: ECOPRO BM CO., LTD., Cheongju-si, Chungcheongbuk-do 28117 (KR)
(72) Inventor: LEE, Donggeun, 28116 Cheongju-si, Chungcheongbuk-do (KR); LEE, Seulgi, 28116 Cheongju-si, Chungcheongbuk-do (KR); OH, Seongho, 28116 Cheongju-si, Chungcheongbuk-do (KR); SHIN, Sehee, 28116 Cheongju-si, Chungcheongbuk-do (KR); KWON, Ohyeon, 28116 Cheongju-si, Chungcheongbuk-do (KR)
(74) Representative: Vossius & Partner Patentanwälte Rechtsanwälte mbB

(57) **Abstract**

A positive electrode active material particle according to an aspect of the present invention includes a bulk material and a first coating material, wherein the first coating material includes zirconium (Zr), and in a Scanning Electron Microscope (SEM) image on one surface of the positive electrode active material particle, the first coating material may be in a dot shape.

## Description

### Technical Field

The present invention relates to positive electrode active material particles and a positive electrode active material for a secondary battery including the same, and more particularly, to a positive electrode active material that significantly improves the stability, charge/discharge capacity, and efficiency characteristics of a secondary battery when applied thereto by controlling the composition, coating method, coating form, and the like of a coating material including zirconium (Zr) on a lithium composite oxide.

### Background

With the development of portable mobile electronic devices such as smartphones, MP3 players, and tablet PCs, the demand for secondary batteries capable of storing electrical energy has been explosively increasing.

In particular, with the emergence of electric vehicles, medium- to large-sized energy storage systems, and portable devices requiring high energy density, the demand for lithium secondary batteries is increasing.

As a lithium composite oxide included in a positive electrode active material, the material that has recently been receiving the most attention is lithium nickel (manganese/aluminum) cobalt oxide, represented as Li(NiₓCo_{γ}(Mn/Al)_{z})O₂ (where x, y, and z are the atomic fractions of the respective independent oxide composition elements, satisfying 0<x≤1, 0<y≤1, 0<z≤1, and 0<x+y+z≤1).

This positive electrode active material has the advantage of exhibiting high capacity because it is used at a higher voltage than LiCoO₂, which has been actively researched and used as a positive electrode active material, and has the advantage of low cost due to its relatively low Co content.

However, such a lithium composite oxide is accompanied by a volume change according to the intercalation and deintercalation of lithium ions during charging and discharging.

Problems arise in that the primary particles of the lithium composite oxide undergo a rapid volume change during charging and discharging, cracks are generated in the secondary particles according to repeated charging and discharging, or the crystal structure collapses or undergoes a phase transition.

To compensate for these shortcomings, the demand for high-nickel (high-Ni) positive electrode active materials, in which the nickel (Ni) content is high relative to the total metal content excluding lithium (Li), has begun to increase.

### Technical Problem

The present invention aims to provide a positive electrode active material that significantly improves the stability, charge/discharge capacity, and efficiency characteristics of a secondary battery when applied thereto by controlling the composition, coating method, coating form, and the like of a coating material including zirconium (Zr).

In particular, the present invention aims to provide a positive electrode active material in which the composition, coating method, and coating form of a coating material are controlled to improve battery performance when a non-washing coating method is applied to compensate for the disadvantages of washing-based coating using a coating solution.

### Technical Solution

A positive electrode active material particle according to an aspect of the present invention may include a bulk material and a first coating material, wherein the first coating material may include zirconium (Zr).

In a more preferred aspect, in a Scanning Electron Microscope (SEM) image of one surface of the positive electrode active material particle, the first coating material may be in a dot shape.

In a more preferred aspect, the first coating material may include at least one selected from ZrO₂ and lithium zirconium oxide.

In a more preferred aspect, the mole percentage (mol%) of zirconium (Zr) included in the positive electrode active material particle relative to the positive electrode active material particle may be from 0.01 mol% to 1.0 mol%.

In a more preferred aspect, the positive electrode active material particle may include 3 to 20 units of the first coating material.

In a more preferred aspect, the average particle diameter (D₅₀) of the first coating material included in the positive electrode active material particle may be from 50 nm to 150 nm.

In a more preferred aspect, the positive electrode active material particle may further include a second coating material, and the second coating material may include cobalt (Co).

In a more preferred aspect, the second coating material may coat a portion of the surface of the bulk material.

In a more preferred aspect, in a Scanning Electron Microscope (SEM) image of one surface of the positive electrode active material particle, the ratio of the coating area of the second coating material to the total area of the one surface may be from 30% to 98%.

In a more preferred aspect, the average particle diameter (D₅₀) of the positive electrode active material particle may be from 1.0 µm to 6.0 µm.

In a more preferred aspect, the bulk material may consist of one single particle or may include 2 to 8 single particles in contact with each other.

A positive electrode active material according to a more preferred aspect may include the positive electrode active material particles.

### Advantageous Effects

As one effect, the present invention provides a positive electrode active material with increased stability and a reinforced bulk and coating structure, which suppresses direct contact between the surface and an electrolyte to reduce the amount of gas generation that directly affects lifespan degradation.

As another effect, the present invention provides a positive electrode active material that significantly improves the stability, charge/discharge capacity, and efficiency characteristics of a secondary battery.

### Brief Description of the Drawings

FIG. 1 is an SEM image of the surface of a positive electrode active material particle according to an embodiment of the present invention.
FIG. 2 is an SEM image of the surface of a positive electrode active material particle according to an embodiment of the present invention.
FIG. 3 is an SEM image of the surface of a positive electrode active material particle according to an embodiment of the present invention.

### Detailed Description

Expressions such as "comprising," as used in this specification, should be understood as open-ended terms that imply the possibility of including other components.

The terms "preferred" and "preferably," as used in this specification, refer to embodiments of the present invention that may provide certain advantages under certain circumstances. However, they are not intended to exclude other embodiments from the scope of the present invention.

In addition, the singular forms used in the specification and the appended claims are intended to include the plural forms as well, unless the context clearly indicates otherwise. That is, a technical feature described for a single particle may signify a technical feature for a plurality of particles, and may be intended to mean an average technical feature for a plurality of particles.

Numerical ranges used in this specification include the lower limit, the upper limit, all values within that range, increments logically derived from the form and width of the defined range, all doubly-limited values, and all possible combinations of the upper and lower limits of numerical ranges defined in different forms.

Unless otherwise specified herein, values outside a numerical range that may arise due to experimental error or rounding are also included within the defined numerical range.

The meanings of '≤', 'at least', or 'at most' described in this specification may be replaced with the meanings of '<', 'greater than', or 'less than'.

Meanwhile, the technical features described below relate to an aspect for achieving the above-described desired effects of the present invention.

That is, a positive electrode active material according to an aspect of the present invention includes the technical features according to the aspect described below, thereby further reinforcing the bulk structure and coating structure of the particles and significantly improving the stability, charge/discharge capacity, and efficiency characteristics of a secondary battery.

The present invention relates to positive electrode active material particles for a secondary battery and a positive electrode active material including a plurality of these particles.

The secondary battery of the present invention is not limited in its type, as long as it is a battery that can convert external electrical energy into the form of chemical energy for storage and reuse. As an example, the present invention may relate to a positive electrode active material for a lithium-ion secondary battery.

A positive electrode active material particle according to an aspect of the present invention may include a bulk material and a first coating material.

First, the bulk material will be described.

More preferably, the bulk material may be a lithium composite oxide.

More preferably, the bulk material may be a lithium composite oxide including nickel (Ni).

More preferably, the bulk region may be a lithium composite oxide including nickel (Ni) and cobalt (Co).

More preferably, the lithium composite oxide may be represented by the following Chemical Formula 1.

[Chemical Formula 1] LiₐNiₓM1_{γ}M2_{1-x-γ}O₂

In Chemical Formula 1, M1 is selected from the group consisting of cobalt (Co), manganese (Mn), aluminum (Al), and combinations thereof; M2 is selected from the group consisting of Zr, Mn, Al, B, S, Ba, Ce, Cr, F, Mg, V, Ti, Fe, Zn, Si, Y, Nb, Ga, Sn, Mo, W, P, Sr, Na, K, Hf, Ta, Cu, and combinations thereof; and 0.9 ≤ a ≤ 1.2, 0.1 ≤ x < 1.0, 0.0 ≤ y ≤ 0.5, and 0.0 ≤ 1-x-y ≤ 0.5.

More preferably, in Chemical Formula 1, 'a', which signifies the mole percentage of lithium (Li) relative to the total mole percentage of transition metals excluding lithium (Li), may be 0.9 or more, 1.0 or more, 1.2 or less, 1.1 or less, or 1.05 or less.

More preferably, in Chemical Formula 1, 'x', which signifies the mole percentage of nickel (Ni) relative to the total mole percentage of transition metals excluding lithium (Li), may be 0.1 or more, 0.2 or more, 0.3 or more, 0.4 or more, 0.5 or more, 0.6 or more, 0.7 or more, 0.8 or more, or 0.9 or more, and in particular, the present invention may be a high-nickel (high-Ni) oxide where x is 0.5 or more.

While such a high-nickel positive electrode active material has the advantage of high energy density, the high Li/M ratio during its manufacturing leads to a high content of residual lithium remaining in the positive electrode active material after calcination, which causes a gelation phenomenon during electrode slurry preparation and makes cell manufacturing difficult. To remove residual lithium, a water-washing process is introduced, but this process damages the positive electrode surface, which lowers battery characteristics.

Furthermore, the structure becomes unstable due to the high Ni content, and increased reactions with the electrolyte at the particle surface and interface lead to the release of a large amount of gas during repetitive charging and discharging, which reduces lifespan characteristics. The present invention can resolve this problem, which is more intensified in high-nickel (high-Ni) positive electrode active materials.

More preferably, in Chemical Formula 1, when 'y' signifies the mole percentage of cobalt (Co) relative to the total mole percentage of transition metals excluding lithium (Li), y may be 0.5 or less, 0.4 or less, 0.3 or less, 0.2 or less, or 0.1 or less.

More preferably, in Chemical Formula 1, when 'y' signifies the mole percentage of Al and/or Mn relative to the total mole percentage of transition metals excluding lithium (Li), y may be 0.5 or less, 0.4 or less, 0.3 or less, 0.2 or less, 0.1 or less, 0.1 or more, 0.2 or more, or 0.3 or more.

More preferably, the bulk region may be doped with at least one element selected from the group consisting of cobalt (Co), zirconium (Zr), barium (Ba), strontium (Sr), titanium (Ti), aluminum (Al), niobium (Nb), vanadium (V), molybdenum (Mo), boron (B), yttrium (Y), tungsten (W), magnesium (Mg), zinc (Zn), iron (Fe), tantalum (Ta), silicon (Si), and fluorine (F).

More preferably, the bulk region may be doped with at least one element selected from the group consisting of cobalt (Co), zirconium (Zr), barium (Ba), strontium (Sr), aluminum (Al), and titanium (Ti).

When preparing the positive electrode active material of the present invention, a lithium composite oxide can be prepared by heat-treating a hydroxide precursor and a lithium compound.

At this time, by heat-treating the doping element together, it can be uniformly doped within the lattice structure of the primary particles.

In another aspect, when coating the lithium composite oxide particles, a portion of the coating element may exist within the lattice structure of the primary particles included in the lithium composite oxide particles.

In this case, the coating element may be doped into the lithium composite oxide particles.

Meanwhile, the lithium composite oxide particles related to the bulk material are defined as including all such doped elements.

More preferably, zirconium (Zr) is a coating element that is coated after the preparation of the lithium composite oxide, and it may be doped during the coating heat treatment to exist within the lattice structure of the primary particles.

More preferably, cobalt (Co) is a coating element that is coated after the preparation of the lithium composite oxide, and it may be doped during the coating heat treatment to exist within the lattice structure of the primary particles.

More preferably, aluminum (Al) is a coating element that is coated after the preparation of the lithium composite oxide, and it may be doped during the coating heat treatment to exist within the lattice structure of the primary particles.

As described above, the present invention can further reinforce the bulk structure and further improve the stability, charge/discharge capacity, and efficiency characteristics of a secondary battery by controlling the dopant and bulk composition.

Next, the first coating material will be described.

More preferably, the first coating material may be a region distinct from the lithium composite oxide particles, which are the bulk material.

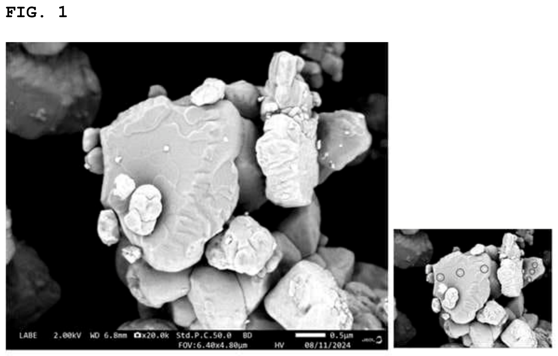

More preferably, the first coating material may include zirconium (Zr), and in a Scanning Electron Microscope (SEM) image of one surface of the positive electrode active material particle, the first coating material may be in a dot shape (see FIG. 1).

The present invention has confirmed that by coating zirconium (Zr) in a dot shape, the coating structure can be further reinforced, and the stability, charge/discharge capacity, and efficiency characteristics of a secondary battery can be further improved.

Meanwhile, in the present invention, the Scanning Electron Microscope (SEM) image was obtained by acquiring a surface FE-SEM image of the particles at a voltage of 2 kV using a JSM-IT8800 (JEOL).

More preferably, in a Scanning Electron Microscope (SEM) image in Low Angle Backscatter Electron (LABE) mode of one surface of the positive electrode active material particle, the first coating material may have the highest brightness (see FIG. 1).

This may be a difference in brightness due to differences in the type and density of the coating elements.

In the present invention, the Scanning Electron Microscope (SEM) image was obtained by measuring the particle surface in Low Angle Backscatter Electron (LABE) mode using a voltage of 2 kV.

More preferably, the first coating material may include ZrO₂ and/or lithium zirconium oxide.

More preferably, the mole percentage (mol%) of zirconium (Zr) included in the positive electrode active material particle relative to the positive electrode active material particle may be 0.01 mol% or more, 0.05 mol% or more, 0.1 mol% or more, 1.0 mol% or less, 0.5 mol% or less, 0.4 mol% or less, 0.3 mol% or less, 0.2 mol% or less, or 0.15 mol% or less, and more preferably, may be from 0.05 mol% to 0.2 mol%.

The present invention has confirmed that when considering the coating shape of zirconium (Zr), including it in the above molar content can further improve the charge/discharge capacity and efficiency characteristics of a secondary battery.

More preferably, the positive electrode active material particle may include 2 or more, 3 or more, 4 or more, 5 or more, 6 or more, 7 or more, 8 or more, 20 or less, 19 or less, 18 or less, 17 or less, 16 or less, 15 or less, 14 or less, 13 or less, 12 or less, 11 or less, or 10 or less units of the first coating material.

The present invention can further reinforce the coating structure and further improve the charge/discharge capacity and efficiency characteristics of a secondary battery by including the number of units of the first coating material within the above numerical range.

More preferably, the average particle diameter (D₅₀) of the first coating material included in the positive electrode active material particle may be 50 nm or more, 60 nm or more, 70 nm or more, 80 nm or more, 150 nm or less, 140 nm or less, or 130 nm or less, and more preferably, may be from 70 nm to 130 nm.

The present invention can further reinforce the coating structure and further improve the charge/discharge capacity and efficiency characteristics of a secondary battery by controlling the average particle diameter (D₅₀) of the first coating material to be within the above numerical range.

Meanwhile, in the present invention, the average particle diameter (D₅₀) of the first coating material was calculated by converting units through a scale bar of an SEM image at the same magnification of x20.0K and then measuring the diameter of 5 to 15 arbitrarily selected units of the first coating material using the ImageJ program to calculate the average.

Meanwhile, in the present invention, if the average value of the diameters of 5 to 15 arbitrarily selected units of the first coating material satisfies the above numerical range, it can be interpreted as corresponding thereto.

As described above, the present invention can further reinforce the coating structure and further improve the stability, charge/discharge capacity, and efficiency characteristics of a secondary battery by controlling the composition, form, and the like of the first coating material.

More preferably, the positive electrode active material particle may further include a second coating material, and the second coating material may include cobalt (Co).

More preferably, the cobalt (Co) may exist in forms such as LiCoO₂, Li₁₊ₐCoO₂(0<a<1), Li_{1-b}CoO₂(0<b<1), Co_{q}Oᵣ (0<q<10, 0<r<10), and/or Co(OH)₂ within the coating material.

More preferably, the average concentration of the cobalt (Co) element measured by EP-EDS (Energy Profiling-Energy Dispersive X-Ray Spectroscopy), which measures the average concentration of an element from the surface of the positive electrode active material particle to the depth penetrated by an electron beam irradiated at an acceleration voltage of 1 kV onto the second coating material on the surface of the positive electrode active material particle, may be 20 at% or more, 30 at% or more, 40 at% or more, 50 at% or more, 80 at% or less, 70 at% or less, 60 at% or less, 50 at% or less, 40 at% or less, or 30 at% or less.

More preferably, the second coating material may further include at least one selected from the group consisting of aluminum (Al), titanium (Ti), zirconium (Zr), magnesium (Mg), zinc (Zn), molybdenum (Mo), iron (Fe), nickel (Ni), barium (Ba), tungsten (W), strontium (Sr), yttrium (Y), niobium (Nb), vanadium (V), boron (B), tantalum (Ta), silicon (Si), and fluorine (F), in addition to cobalt (Co).

More preferably, the second coating material may further include at least one selected from the group consisting of aluminum (Al), zirconium (Zr), boron (B), tungsten (W), yttrium (Y), and titanium (Ti), in addition to cobalt (Co).

More preferably, the second coating material may further include aluminum (Al) in addition to cobalt (Co).

More preferably, considering the coating method, coating composition, and coating form of the present invention, when cobalt (Co), zirconium (Zr), and aluminum (Al) are coated on the bulk material, the charge/discharge capacity and efficiency characteristics can be further improved.

As described above, the present invention can further reinforce the coating structure and further improve the stability, charge/discharge capacity, and efficiency characteristics of a secondary battery by controlling the composition of the second coating material.

More preferably, the second coating material may coat a portion of the surface of the bulk material.

More preferably, in a Scanning Electron Microscope (SEM) image of one surface of the positive electrode active material particle, the ratio of the coating area of the second coating material to the total area of the one surface may be 30% or more, 40% or more, 50% or more, 60% or more, 70% or more, 80% or more, 98% or less, or 95% or less, and more preferably, may be from 80% to 96%.

The present invention can further reinforce the coating structure and further improve the stability, charge/discharge capacity, and efficiency characteristics of a secondary battery by controlling the coating area ratio of the second coating material to be within the above numerical range.

In the present invention, the coating area ratio was measured by measuring the area using the ImageJ program on a Scanning Electron Microscope (SEM) image of one surface of the positive electrode active material particle.

Meanwhile, in the present invention, if the coating area ratio measured for one surface of an arbitrarily selected positive electrode active material particle satisfies the above numerical range, it can be interpreted as corresponding thereto.

Meanwhile, during the first coating and/or the second coating, unlike a wet process in which active material particles are immersed in a coating solution, the present invention can implement the above-described coating area and form by controlling the coating amount, heat treatment temperature and time, particle size, etc., through a dry coating process during a second heat treatment without a washing process.

In particular, the present invention has controlled the composition, coating method, and coating form of a coating material to further improve battery performance when a non-washing coating method is applied to compensate for the disadvantages of washing-based coating using a coating solution.

More preferably, the thickness of the second coating material measured in a direction perpendicular to the surface of the bulk material may be from 1 nm to 100 nm, and more preferably from 20 nm to 60 nm.

In the present invention, the thickness of the second coating material was calculated by obtaining a cross-sectional SEM image of the lithium composite oxide at a voltage of 2 kV using a JSM-7610FPlus (JEOL), and then measuring the thickness of the second coating material at 10 arbitrarily selected points to calculate the average value.

Meanwhile, in the present invention, if the thickness of the second coating material at 10 arbitrarily selected points satisfies the above numerical range, it can be interpreted as corresponding thereto.

As described above, the present invention can further reinforce the coating structure and further improve the stability, charge/discharge capacity, and efficiency characteristics of a secondary battery by controlling the coating method and coating form for the second coating material.

Meanwhile, more preferably, the first coating material may exist on the surface of the bulk material or on the surface of the second coating material.

The average particle diameter (D₅₀) of the positive electrode active material particle according to an aspect of the present invention may be 1.0 µm or more, 2.0 µm or more, 2.5 µm or more, 3.0 µm or more, 6.0 µm or less, 5.5 µm or less, 5.0 µm or less, or 4.5 µm or less, and more preferably, may be from 3.0 µm to 4.0 µm.

In the present invention, the average diameter (D₅₀) is the particle diameter at the 50% point of the cumulative area distribution according to particle size, and this can be measured using a laser diffraction method.

Specifically, a powder to be measured is dispersed in a dispersion medium, and then introduced into a commercially available laser diffraction particle size analyzer to calculate the particle size distribution by measuring the difference in diffraction patterns according to particle size as the particles pass through a laser beam.

Meanwhile, the bulk material may be a particle formed by the contact of at least one single particle. Here, a single particle means a primary particle.

More preferably, the bulk material may consist of one single particle, or may include 8 or less, 7 or less, 6 or less, 5 or less, 4 or less, 3 or less, or 2 or less single particles in contact with each other.

More preferably, when the bulk material consists of one single particle, it may consist of one single particle having an average particle diameter (D₅₀) of 2.0 µm or more, 2.5 µm or more, 3.0 µm or more, 6.0 µm or less, 5.5 µm or less, 5.0 µm or less, or 4.5 µm or less, and more preferably, from 3.0 µm to 4.0 µm.

More preferably, when the bulk material includes 2 to 8 single particles in contact, it may include 2 to 8 single particles of 1 µm or more, 3 µm or less, or 2 µm or less in contact with each other.

More preferably, the aspect ratio (longest major axis / shortest minor axis) of the single particle may be 1 or more, 2 or more, 3 or less, 2 or less, 1.5 or less, 1.2 or less, or 1.1 or less.

A positive electrode active material according to an aspect of the present invention may include a plurality of the positive electrode active material particles.

A positive electrode according to an aspect of the present invention includes the positive electrode active material.

Except for using the above-described positive electrode active material, the positive electrode may have a known structure and may be manufactured according to a known manufacturing method.

A binder, a conductive agent, and a solvent are not particularly limited as long as they can be used on a positive electrode current collector of a secondary battery.

A secondary battery according to an aspect of the present invention includes the positive electrode active material.

The secondary battery may specifically include a positive electrode, a negative electrode positioned opposite the positive electrode, and an electrolyte between the positive electrode and the negative electrode, but is not particularly limited as long as it can be used as a secondary battery.

Hereinafter, embodiments of the present invention will be described in more detail.

### EXAMPLES

### Preparation of Positive Electrode Active Material

### <Example 1>

A NiCoMn(OH)₂ hydroxide precursor (Ni:Co:Mn = 95:2:3 (at%)) of a lithium composite oxide was synthesized through a known coprecipitation method using nickel sulfate, cobalt sulfate, and manganese sulfate.

Subsequently, the hydroxide precursor and LiOH (Li/(Ni+Co+Mn) mol ratio = 1.05) were mixed and then heat-treated (first calcination) in an O₂ atmosphere at 790°C for 12 hours to obtain a lithium composite oxide.

Thereafter, the product was pulverized using a jet mill to prepare single-particle-form lithium composite oxide.

Next, in an O₂ atmosphere at 700°C, 3 mol% of Co(OH)₂, 0.1 mol% of ZrO₂, and 0.1 mol% of Al₂O₃, relative to the lithium composite oxide particles, were mixed and heat-treated (second calcination) in an oxygen atmosphere for 12 hours to prepare a positive electrode active material with a particle size of 3 µm to 4 µm.

### <Example 2>

A positive electrode active material was prepared in the same manner as in Example 1, except that 3 mol% of Co(OH)₂ and 0.1 mol% of ZrO₂ were mixed, instead of mixing 3 mol% of Co(OH)₂, 0.1 mol% of ZrO₂, and 0.1 mol% of Al₂O₃.

### <Example 3>

A positive electrode active material was prepared in the same manner as in Example 1, except that 3 mol% of Co(OH)₂ and 0.5 mol% of ZrO₂ were mixed, instead of mixing 3 mol% of Co(OH)₂, 0.1 mol% of ZrO₂, and 0.1 mol% of Al₂O₃.

### <Comparative Example 1>

A positive electrode active material was prepared in the same manner as in Example 1, except that 3 mol% of Co(OH)₂ and 0.1 mol% of TiO₂ were mixed, instead of mixing 3 mol% of Co(OH)₂, 0.1 mol% of ZrO₂, and 0.1 mol% of Al₂O₃.

### <Comparative Example 2>

A positive electrode active material was prepared in the same manner as in Example 1, except that 3 mol% of Co(OH)₂ and 0.5 mol% of TiO₂ were mixed, instead of mixing 3 mol% of Co(OH)₂, 0.1 mol% of ZrO₂, and 0.1 mol% of Al₂O₃.

### <Comparative Example 3>

A positive electrode active material was prepared in the same manner as in Example 1, except that 3 mol% of Co(OH)₂ and 0.1 mol% of Al₂O₃ were mixed, instead of mixing 3 mol% of Co(OH)₂, 0.1 mol% of ZrO₂, and 0.1 mol% of Al₂O₃.

### <Comparative Example 4>

A positive electrode active material was prepared in the same manner as in Example 1, except that 3 mol% of Co(OH)₂ and 0.5 mol% of Al₂O₃ were mixed, instead of mixing 3 mol% of Co(OH)₂, 0.1 mol% of ZrO₂, and 0.1 mol% of Al₂O₃.

### <Comparative Example 5>

A positive electrode active material was prepared in the same manner as in Example 1, except that 3 mol% of Co(OH)₂, 0.1 mol% of TiO₂, and 0.1 mol% of Al₂O₃ were mixed, instead of mixing 3 mol% of Co(OH)₂, 0.1 mol% of ZrO₂, and 0.1 mol% of Al₂O₃.

### Fabrication of Lithium Secondary Battery

For each of the positive electrode active materials prepared according to the preparation examples, 96 wt% of the positive electrode active material, 2 wt% of artificial graphite, and 2 wt% of a PVDF binder were dispersed in 8 g of N-methyl-2-pyrrolidone (NMP) to prepare a positive electrode slurry.

The positive electrode slurry was uniformly coated on an aluminum thin film with a thickness of 15 µm and vacuum-dried at 135°C to fabricate a positive electrode for a lithium secondary battery.

A coin cell was fabricated using the positive electrode, a lithium foil as a counter electrode, a porous polyethylene membrane (Celgard 2300, thickness: 25 µm) as a separator, and an electrolyte in which 1.15 M of LiPF₆ was present in a solvent mixture of ethylene carbonate and ethyl methyl carbonate at a volume ratio of 3:7.

### <Experimental Example 1> SEM Analysis

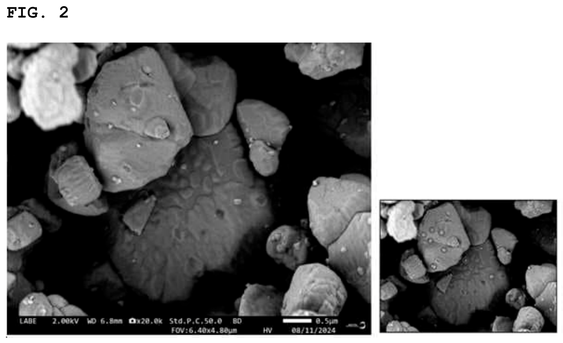

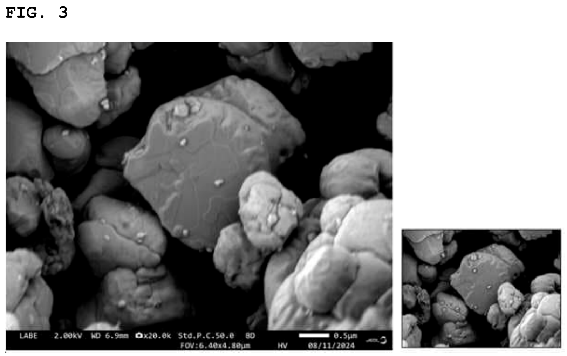

For the positive electrode active material particles according to Example 1, a particle surface image was obtained at a voltage of 2 kV using an FE-SEM (JSM-IT8800, JEOL), and the results are shown in FIGS. 1 to 3.

### <Experimental Example 2> Measurement of Average Particle Diameter (D₅₀) of Zr White Dots

For the surface of the positive electrode active material particles according to Example 1, units were converted through a scale bar of an SEM image at the same magnification of x20.0K, and the diameter of 7 to 12 units of the first coating material was measured using the ImageJ program to calculate the average value, which is shown in Tables 1 to 3 below.

**TABLE 1**

| **SEM (1) -** **FIG. 1** | |
|---|---|
| **White Dot** | **D₅₀ (nm)** |
| 1 | 85.02538 |
| 2 | 109.1371 |
| 3 | 74.8731 |
| 4 | 124.3655 |
| 5 | 43.14721 |
| 6 | 63.45178 |
| 7 | 85.02538 |
| Average | 83.5751 |

**TABLE 2**

| **SEM (2) -** **FIG. 2** | |
|---|---|
| **White Dot** | **D₅₀ (nm)** |
| 1 | 68.52792 |
| 2 | 79.94924 |
| 3 | 69.79695 |
| 4 | 83.75635 |
| 5 | 71.06599 |
| 6 | 45.68528 |
| 7 | 73.60406 |
| 8 | 90.10152 |
| 9 | 129.44162 |
| 10 | 86.29442 |
| 11 | 93.90863 |
| 12 | 143.40102 |
| Average | 86.29442 |

**TABLE 3**

| **SEM (3) -** **FIG. 3** | |
|---|---|
| **White Dot** | **D₅₀ (nm)** |
| 1 | 87.56345 |
| 2 | 106.599 |
| 3 | 133.2487 |
| 4 | 119.2893 |
| 5 | 135.7868 |
| 6 | 126.9036 |
| 7 | 154.8223 |
| 8 | 135.7868 |
| 9 | 139.5939 |
| 10 | 85.02538 |
| Average | 122.462 |

### <Experimental Example 3> Charge/Discharge Capacity and Efficiency

For the lithium secondary batteries of the Examples and Comparative Examples, the initial charge capacity and initial discharge capacity were measured through a charge/discharge experiment using an electrochemical analyzer (Toyo, Toscat-3100) at 25°C, in a voltage range of 3.0 V to 4.3 V, applying a discharge rate of 0.1 C, and the efficiency was calculated and is shown in Table 4 below.

**TABLE 4**

| **Category** | **Ex. 1** | **Ex. 2** | **Ex. 3** | **Comp. Ex. 1** | **Comp. Ex. 2** | **Comp. Ex. 3** | **Comp. Ex. 4** | **Comp. Ex. 5** |
|---|---|---|---|---|---|---|---|---|
| **Temperature** | 700°C | 700°C | 700°C | 700°C | 700°C | 700°C | 700°C | 700°C |
| **Charge** | 246.8 | 244.9 | 244 | 244.7 | 244.8 | 244.6 | 244.7 | 247.1 |
| **Discharge** | 220.7 | 218.3 | 216.5 | 217.3 | 213.3 | 217.2 | 216.4 | 219.3 |
| **Efficiency (%)** | 89.40 | 89.10 | 88.80 | 88.60 | 87.10 | 88.50 | 88.40 | 88.60 |

## Claims

1. A positive electrode active material particle, comprising:
a bulk material; and a first coating material;
wherein the first coating material comprises zirconium (Zr), and
wherein, in a Scanning Electron Microscope (SEM) image of one surface of the positive electrode active material particle, the first coating material is in a dot shape.

2. The positive electrode active material particle of claim 1,
wherein the first coating material comprises at least one selected from the group consisting of ZrO₂ and lithium zirconium oxide.

3. The positive electrode active material particle of claim 1,
wherein a mole percentage of zirconium (Zr) included in the positive electrode active material particle is from 0.01 mol% to 1.0 mol% relative to the positive electrode active material particle.

4. The positive electrode active material particle of claim 1,
wherein the positive electrode active material particle comprises from 2 to 20 units of the first coating material.

5. The positive electrode active material particle of claim 1,
wherein an average particle diameter (D₅₀) of the first coating material included in the positive electrode active material particle is from 50 nm to 150 nm.

6. The positive electrode active material particle of claim 1,
wherein the positive electrode active material particle further comprises a second coating material, and the second coating material comprises cobalt (Co).

7. The positive electrode active material particle of claim 6,
wherein the second coating material coats a portion of a surface of the bulk material.

8. The positive electrode active material particle of claim 6,
wherein, in a Scanning Electron Microscope (SEM) image of one surface of the positive electrode active material particle, a ratio of a coating area of the second coating material to a total area of the one surface is from 30% to 98%.

9. The positive electrode active material particle of claim 1,
wherein an average particle diameter (D₅₀) of the positive electrode active material particle is from 1.0 µm to 6.0 µm.

10. The positive electrode active material particle of claim 1,
wherein the bulk material consists of one single particle, or comprises from 2 to 8 single particles in contact with each other.

11. A positive electrode active material, comprising:
the positive electrode active material particle according to claim 1.
